# EUROPEAN PATENT APPLICATION

(11) **EP 4 395 248 A1**
(43) Date of publication of application: **03.07.2024**
(21) Application number: 22903184.4
(22) Date of filing: 21.11.2022
(51) Int. Cl.: H04L 12/64

(54) **INFORMATION PROCESSING METHOD, ELECTRONIC DEVICE, AND STORAGE MEDIUM**

(30) Priority: 07.12.2021 CN 202111483593
(71) Applicant: ZTE Corporation, Shenzhen, Guangdong 518057 (CN)
(72) Inventor: XUE, Yan, Shenzhen, Guangdong 518057 (CN); XIE, Feng, Shenzhen, Guangdong 518057 (CN)
(74) Representative: Aipex B.V.
(86) International application number: PCT/CN2022/133280
(87) International publication number: WO 2023/103761

(57) **Abstract**

Provided are an information processing method, an electronic device, and a storage medium. The method includes that a first network element configures a label according to a physical meaning corresponding to acquired attribute feature information and the first network element sends the label to the second network element. The label is configured for communication with a second network element.

## Description

### TECHNICAL FIELD

The present application relates to the field of radio communication technology, for example, an information processing method, an electronic device, and a storage medium.

### BACKGROUND

A variety of communication objects may be divided regarding different levels in a communication system, such as domains, protocol layers, network elements, nodes, devices, terminals, and agents. From a field perspective, the communication objects correspond to fields including an access network, a core network, a bearer network, an application, etc. From a traffic type perspective, the communication objects may be divided into a control domain and a data domain, and the data domain is further divided into a traffic domain containing user data and traffic data, an operation domain containing network operation and maintenance data, and a management domain containing communication management data. From a node perspective, the communication objects may include base stations, relays, users, terminals, and so on. Additionally, the protocol layers may also be the communication object. Information interaction may exist between adjacent layers or across layers. With the development of communication networks, the types and number of communication objects become increasingly great, which makes various communication objects fail to recognize and respond to the communication networks accurately and quickly, greatly affecting the performance and efficiency of the communication networks.

### SUMMARY

An embodiment of the present application provides an information processing method. The method includes that a first network element configures a label according to a physical meaning corresponding to acquired attribute feature information and the first network element sends a label to the second network element, where the label is configured for communication with the second network element.

An embodiment of the present application further provides an electronic device. The electronic device includes one or more processors and a memory configured to store one or more programs, and the one or more programs are executed by the one or more processors to cause the one or more processors to perform the information processing method according to any embodiment of the present application.

An embodiment of the present application further provides a computer-readable storage medium storing one or more programs, when the one or more programs are executed by one or more processors, the information processing method according to any embodiment of the present application is performed.

### BRIEF DESCRIPTION OF DRAWINGS

FIG. 1 is a flowchart of an information processing method according to an embodiment of the present application.
FIG. 2 is a diagram illustrating label configuration according to an embodiment of the present application.
FIG. 3 is a diagram illustrating label iteration and updating according to an embodiment of the present application.
FIG. 4 is a flowchart of another information processing method according to an embodiment of the present application.
FIG. 5 is a diagram illustrating an information processing method according to an embodiment of the present application.
FIG. 6 is a diagram illustrating an information processing method according to an embodiment of the present application.
FIG. 7 is a structural diagram of an information processing apparatus according to an embodiment of the present application.
FIG. 8 is a structural diagram of an electronic device according to an embodiment of the present application.

### DETAILED DESCRIPTION

In the related art, a communication system has a relatively weak cognition capability, which is specifically manifested as an insufficient cognition degree of a communication object towards itself and other communication objects. A large amount of parameter information is required in a communication process, making the process cumbersome and difficult to change dynamically and flexibly. Repeated information interaction and information storage exist in the communication process, and communication interaction information cannot accurately reflect intentions and requirements. Therefore, inaccurate information interaction brings tremendous processing work and communication delay, and repeated information interaction and storage make communication inefficient. When a huge amount of communication objects exist in a network, the network will be unable to bear such an interaction mode. Moreover, the network changes rapidly after the communication system really operates. In the current technology, communication objects, implementation solutions, and processes are tightly coupled, and it is unable to perform flexible, dynamic and able-to-be-orchestrated operations according to network changes. Additionally, because of different domains or systems, each domain/system in the communication network has its own set of definition methods and rules. Information barriers exist in the communication interaction between domains/systems. A set of transformation systems is required as a bridge for cross-domain and cross-system interaction. Parameters of different domains/systems are mapped to each other in the current technology. A lot of workload may be brought by a great number of to-be-translated parameters, and the meaning of some information may be lost in the process of parameter transfer.

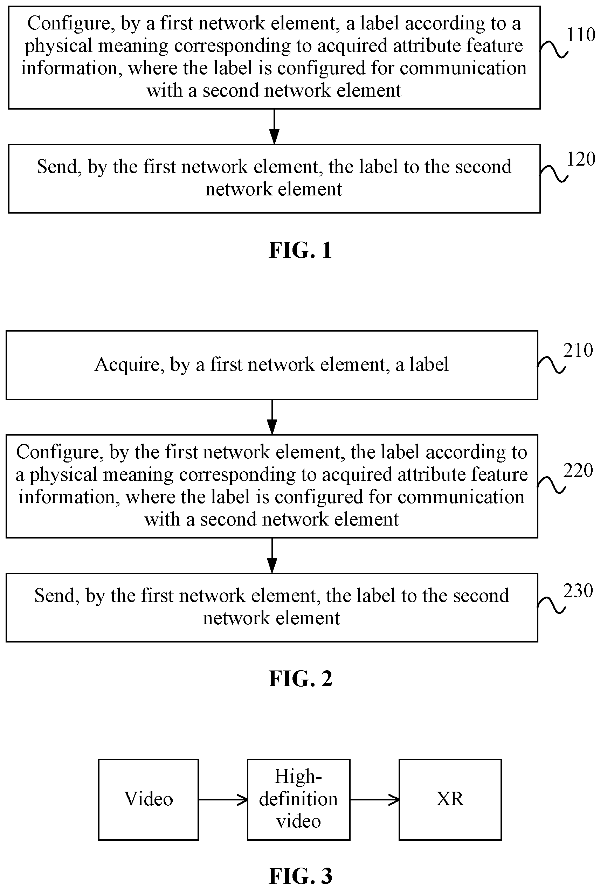

FIG. 1 is a flowchart of an information processing method according to an embodiment of the present application. This embodiment of the present application is applicable to the case of information transmission in radio communication. The method may be performed by an information processing apparatus in an embodiment of the present application. The apparatus may be implemented through software and/or hardware. Referring to FIG. 1, the method provided in this embodiment of the present application includes the following.

In 110, a first network element configures a label according to a physical meaning corresponding to acquired attribute feature information, where the label is configured for communication with a second network element.

The attribute feature information may be information reflecting a communication state of the first network element or other network elements. The attribute feature information may reflect network operation, deployment, and other information. The attribute feature information may include, for example, a traffic type, a traffic volume demand, a load change, and energy consumption. The physical meaning may be a physical quantity, a system statistical feature or a system macroscopic feature in an information interaction process corresponding to the attribute feature information, for example, traffic, traffic volume, energy, and scenario. The meaning corresponding to the attribute feature information is marked by the label. The label is also used for information interaction. Different labels correspond to different physical meanings, enabling a communication object to improve the cognition capability towards itself, other communication objects, and a network, thereby enabling the network to perform the communication process more intelligently.

In this embodiment, the first network element may acquire the attribute feature information, determine the physical meaning corresponding to the attribute feature information, and generate the label according to the physical meaning. The label may be a label of the first network element or a label of another network element. It is to be understood that the process of generating the label according to the physical meaning may include determination through mode recognition or determination through character matching.

In 120, the first network element sends the label to the second network element.

In an embodiment, the first network element may send the generated label to the second network element so that the second network element and the first network element perform information interaction based on the label, which improves communication efficiency.

In this embodiment of the present application, the first network element determines the physical meaning according to the attribute feature information, generates the label according to the physical meaning, and sends the label to the second network element, which improves the accuracy of cognition between network elements, improves the accuracy of communication parameter setting, and enhances the communication efficiency of a radio communication system.

On the basis of the preceding embodiment of the present application, the operation in which the first network element configures the label includes at least one of the following processing: label mapping, label aggregation, label splitting, configuring a label for a data flow, configuring a label for control plane signaling, configuring a label for a flow, configuring a label for a policy, configuring a label for an algorithm, configuring a label for a process, configuring a label for an orchestration mode, configuring a label for an instance, or configuring a label for a parameter.

In this embodiment of the present application, the process of the first network element configuring the label may include one or more of the following: label mapping, label aggregation, label splitting, configuring a label for a data flow, or configuring a label for control plane signaling. The label mapping may be a process of associating the label with another existing label, for example, establishing a correspondence relationship between a label of a core network and a label of an access network so that the core network and the access network mutually understand the label of the other party. The label aggregation may refer to aggregating multiple labels to generate a label for identifying a network element, a network, or a traffic macroscopic feature. For example, each label corresponding to each complaining user in the same geographical position range is aggregated to generate a regional fault label. The label splitting may be a process of splitting a label into multiple labels. A split label may correspond to the feature of one aspect of the original label. For example, a "high speed, mobile, large throughput, and low delay" label is split into an "eMBB scenario" label and a "low delay" label. In a process of label configuration, a label may be configured to, for example, a data flow, control plane signaling, a flow, an execution policy, an algorithm, a process, an orchestration mode, an instance, and a parameter.

On the basis of the preceding embodiments of the present application, the label includes at least one of the following: a label of the first network element, a label of the second network element, or a 1 feature of the first network element and is configured to help the communication network with label of a third network element.

In an embodiment, the label of the first network element may be a label related to an attribute the cognition of the first network element. The label of the second network element may be a label related to an attribute feature of the second network element and is configured to help the communication network with the cognition of the second network element. The label of the third network element may be a label related to an attribute feature of the third network element and is configured to help the communication network with the cognition of the third network element. Each network element in the network may interact with the label of the first network element, the label of the second network element, and the label of the third network element. The first network element, the second network element, and the third network element may be network nodes located in different positions in the radio communication network. The first network element may directly communicate with the second network element. The third network element may communicate with the first network element through the second network element.

In an exemplary embodiment, the label mapping includes that the first network element establishes a correspondence relationship between an acquired new label and an old label already existing in the first network element. The relationship includes at least one of the following: a one-to-one relationship, a one-to-many relationship, or a many-to-many relationship.

In an embodiment, the label mapping may be the process of associating and mapping the newly-configured label with the old label already existing in the first network element. The corresponding relationship between the new label and the old label may include the one-to-one relationship, the one-to-many relationship, or the many-to-many relationship.

In an exemplary embodiment, the label aggregation includes that the first network element aggregates acquired labels to generate a label with a macroscopic feature.

The macroscopic feature may be a macroscopic attribute of the first network element or another network element in a data interaction process. The macroscopic attribute may be generated from a combination of multiple features.

In this embodiment of the present application, the first network element may aggregate multiple labels generated through configuration so that the label generated after aggregation may reflect the macroscopic feature of the first network element.

In another exemplary embodiment, the label splitting includes that the first network element divides an acquired label into different levels to generate multi-level labels.

In an embodiment, the label splitting may be the process of splitting the label according to different levels. One label may be split into multi-level labels. Labels of different levels may correspond to attribute information of different levels in the information interaction process of the first network element or another network element. For example, the label is split into a first-level label, a second-level label, and a third-level label according to priority. The first-level label is used in priority. For example, the label is split into a parent label and a child label according to inheritance. For example, according to the accuracy of traffic description, the first-level label refers to video traffic, and the second-level label refers to, for example, broadcast traffic or video-on-demand traffic.

In another exemplary embodiment, a target of configuring the label for the data flow includes, but is not limited to, one of the following: controlling transmission and processing of the data flow according to the label, controlling quality of service (QoS) guarantee of the data flow according to the label, or carrying the label in a data bearer for transmission.

In this embodiment of the present application, the first network element may configure the label for the data flow to control the transmission and processing of the data flow by using the label. Different labels may correspond to different transmission manners and processing manners. The first network element may also control the quality of service (QoS) of the data flow by using the label so that data flows configured with different labels may be processed with quality of service. The first network element may also configure the label for the data flow so that data bearers and routing directions with different granularity are selected through different labels. The first network element may also configure the label for the data flow to carry the label in the data flow for transmission and send the label to another network element in the manner of data bearing.

In another exemplary embodiment, a target of configuring the label for the control plane signaling includes one of the following: performing signaling management according to the label, or carrying the label in a signaling bearer of a control plane for transmission.

In an embodiment, the first network element may also configure the label for the control plane signaling so that different signaling flows are triggered through different labels. The first network element may also configure the label for the control plane signaling so that different signaling is managed separately through different labels. The first network element may also configure the label for the control plane signaling to carry the label in the signaling for transmission and send the label to another network element in the manner of signaling bearing.

FIG. 2 is a diagram illustrating label configuration according to an embodiment of the present application. This embodiment of the present application is the refinement based on the preceding embodiment of the present application. Referring to FIG. 2, the method provided in this embodiment of the present application includes the following.

In 210, a first network element acquires a label.

In this embodiment of the present application, the first network element may acquire the label. The acquisition process may include receiving a label of another network element or receiving attribute information of another network element and then generating the label based on the attribute information of another network element. Further, the first network element may also measure the attribute information of another network element and determine the label according to a measurement result.

In 220, the first network element configures the label according to a physical meaning corresponding to acquired attribute feature information, where the label is configured for communication with a second network element.

In 230, the first network element sends the label to the second network element.

Further, on the basis of the preceding embodiments of the present application, a method of the first network element acquiring the label includes at least one of the operations below.

The first network element generates the label according to a physical meaning corresponding to the internally-perceived attribute feature information.

The first network element generates the label according to a physical meaning corresponding to the attribute feature information from another network element.

The first network element takes a label from another network element as the label.

The first network element generates the label according to a physical meaning corresponding to the internally-perceived attribute feature information and the attribute feature information from another network element.

The first network element subscribes to the second network element and receives a label published by the second network element.

The first network element acquires the label according to measurement of the second network element.

The first network element sends an information request to the second network element and receives a message response to acquire the label.

In this embodiment of the present application, the first network element may acquire the label in the following manners.

In the first manner, the first network element perceives itself to acquire attribute feature information. The attribute feature information may reflect an information transmission state of the first network element. The label may be generated according to the physical meaning of the attribute feature information.

In the second manner, the first network element may receive the attribute feature information of another network element, determine the physical meaning corresponding to the attribute feature information, and generate the label according to the physical meaning. It is to be understood that another network element may be the second network element directly performing information interaction with the first network element and/or the third network element performing information interaction with the first network element through the second network element. A message transmitted by the third network element may be forwarded by the second network element.

In the third manner, the first network element may directly receive a label of another network element and take this label as the label used by the first network element. The received label may be generated by another network element.

In the fourth manner, the first network element may combine the internally-perceived attribute feature information and the attribute feature information sent by another network element to determine the corresponding physical meaning. The label may be generated by using the physical meaning.

In the fifth manner, the first network element may subscribe to the second network element for receiving the label published by the second network element. The first network element may actively acquire the label generated by the second network element.

In the sixth manner, the first network element may send a request to the second network element. The second network element feeds back the message response corresponding to the request. The first network element may acquire the label according to the acquired message response.

In the seventh manner, the first network element acquires the label according to the measurement of the second network element.

Further, on the basis of the preceding embodiments of the present application, after the first network element acquires the label, the method further includes performing at least one of the operations below.

The first network element sends the label to the second network element.

The first network element sends the label to the second network element so that the second network element forwards the label to the third network element.

The first network element publishes the label to a network element already subscribing to a label notification service.

The first network element sends label feedback to the second network element after the first network element receives a label of the second network element.

The first network element receives feedback from the second network element on the first network element sending the label.

The first network element carries the label in a data subheader for sending.

The first network element carries the label in control signaling for sending.

In this embodiment of the present application, after acquiring the label, the first network element may also use the label to perform one or more of the operations below.

In the first operation, the first network element sends the label to the second network element.

In the second operation, the first network element forwards the label to the third network element through the second network element so that the third network element implements accurate cognition based on the label.

In the third operation, the first network element may send the label to another network element subscribing to the label. The subscription process may be before the generation of the label.

In the fourth operation, after the first network element receives the label of the second network element, the first network element may generate the label feedback corresponding to the label and send the label feedback to the second network element.

In the fifth operation, the first network element may perform transmission in the data subheader.

In the sixth operation, the first network element may transmit the data in the control signaling.

In the seventh operation, the first network element receives the feedback from the second network element on the first network element sending the label.

Further, on the basis of the preceding embodiments of the present application, after the first network element acquires the label, the method further includes performing at least one of the operations below.

At least one set of rules is selected according to the label, and the at least one set of rules is executed according to the at least one set of rules.

At least one set of policies is selected according to the label, and the at least one set of policies is executed according to the at least one set of policies.

At least one set of network orchestration modes is selected according to the label, and network orchestration is performed according to the at least one set of network orchestration modes.

At least one instantiation process is selected according to the label, and instantiation is performed according to the at least one instantiation process.

At least one flow is selected according to the label, and the at least one flow is executed according to the at least one flow.

At least one set of parameters is selected according to the label, and parameter configuration is performed according to the at least one set of parameters.

An intelligent operation is performed according to the label.

Further, on the basis of the preceding embodiments of the present application, the method further includes that the first network element stores the acquired label, which includes one of the operations below.

The label is taken as a newly-added label for storage.

A stored old label is replaced with the label.

The acquired new label is stored, and an old label mutually exclusive to the acquired new label is deleted.

The acquired new label and an old label are split and recombined to form multi-level labels, and the multi-level labels are stored.

A mapping relationship between the acquired new label and an old label is established, and the label mapping relationship is stored.

The acquired new label and an old label are aggregated to form an aggregation label, and the aggregation label is stored.

In an exemplary embodiment, the stored label is deleted when one of the following conditions is satisfied:
A survival timer of the label times out, or an extinction condition of the label is triggered.

In another exemplary embodiment, the label is stored structurally according to a corresponding type. The type includes, but is not limited to, one of the following: a parent label, a child label, an extension label, an information compression label, a segmentation label, a statically fixed label, a dynamically variable label, a qualitative label, a quantitative label, a grading label, a state label, a demand label, a time label, a scenario label, a traffic label, a performance label, a device label, a configuration label, a security label, a model label, or an operation and maintenance label.

Further, on the basis of the preceding embodiments of the present application, the attribute feature information corresponding to the label includes, but is not limited to, at least one of the following: communication resource information, computing power resource information, node intention information, node semantic information, node target information, node demand information, system performance information, system capability information, system fault information, device type information, device manufacturer information, device model information, node position information, node time information, or node policy execution information.

Further, on the basis of the preceding embodiments of the present application, a method of acquiring the internally-perceived attribute feature information includes at least one of the operations below.

Self-stored information is extracted on demand, or information reporting and summarization are performed through specific internal signaling.

Further, on the basis of the preceding embodiments of the present application, the attribute feature information includes at least one of the following: a performance parameter, a configuration parameter, a traffic feature parameter, a statistical parameter, a signaling parameter, or a label from another network element.

Further, on the basis of the preceding embodiments of the present application, a network element includes one of the following: a domain, a subject, a node, an entity, a protocol layer, an access network, a core network, a transmission network, a radio access network, a wired access network, a base station, a terminal, a communication network element, or a network function.

In an exemplary embodiment, the first network element may generate a label according to its own condition. The first network element may generate the label of the first network element by perceiving its own condition. For example, in regions with an obvious communication tidal effect, such as subways, business districts, and office buildings, the communication flow peak is in the daytime, and the communication flow is smaller at night. A base station, as the first network element, records load conditions and the corresponding time that meet a peak threshold and a trough threshold by perceiving its load change at different periods of time in a day. When the load magnitude and the corresponding time change meet a rule, the base station marks itself with a "tidal effect" label. A specific policy is executed for any base station with this label. For example, a base station adopting multi-carrier transmission and with the "tidal effect" label executes the policy of carrier dynamic switching, saving the transmission power of the base station and reducing the power consumption of the base station. The operations are described below.

In operation 1, newly-deployed base station 1 turns on all carrier resources and records the load every hour of the day.

In operation 2, base station 1 is marked with the "tidal effect" label when a period in which the traffic volume exceeds the traffic peak threshold and a period in which the traffic volume is below the traffic trough threshold exist.

In operation 3, base station 1 with the "tidal effect" label executes the policy of carrier dynamic switching in morning and evening periods and optimizes a scheduling algorithm and parameter configuration. For example, all carriers are turned on in the daytime, while only one default carrier is retained in the evening and the other carriers are turned off.

In operation 4, base station 1 learns through information interaction that base station 2 also has the feature of tidal effect. For example, base station 1 sees that base station 2 also has the "tidal effect" label.

In operation 5, base station 1 recommends its parameter configuration, algorithm and policy corresponding to the "tidal effect" label to base station 2 to help base station 2 with optimization.

The base station is labeled with the "tidal effect" label through the perception of the base station, and the parameter configuration and the algorithm policy of the base station are adjusted and optimized. Moreover, the parameter, algorithm and policy formed by the base station with the "tidal effect" label may also be recommended to other base stations with the "tidal effect" label to help these base stations quickly match the parameter, algorithm and policy. In the manner of artificial intelligent (AI), machine learning and federation learning are performed on base stations with the same label so that a better parameter, algorithm and policy can be formed for the base stations with the same label, improving the intelligent level of a network.

In another exemplary embodiment, the first network element may label another network element. For example, a user equipment (UE) may serve as the first network element to label a base station providing a service for the UE. A label is used to identify the service capability of the base station. After accessing a serving cell, when the UE frequently drops calls, or the data transmission rate is low, even the data transmission of the serving cell cannot be obtained for a long time, the UE marks the serving cell with a "poor service capability" label and broadcasts the label to other UEs near the UE. When a UE receiving the label selects or switches a serving cell, the serving cell with the "poor service capability" label is taken as an access-forbidden cell, preventing a terminal from accessing the cell with poor service effect and causing a waste of system resources.

In another exemplary embodiment, the first network element may generate the label of the first network element according to the received information of another network element. For example, a base station serves as the first network element. After the base station receives a certain number of repeated access requests from terminals or after a certain number of terminals simultaneously configure the base station with a "poor service capability" label, the base station may conduct a risk assessment. When the base station determines according to the risk assessment that the base station is attacked maliciously, the base station may configure a "security risk existence" label for itself and trigger a security protection mechanism corresponding to the label.

In an exemplary embodiment, after an encryption protocol is used in radio communication to encrypt transmitted data, a bottom layer cannot use deep packet inspection (DPI) to inspect a specific traffic, making a radio communication network unable to perform special optimization, diversion and charging on the specific traffic. In this embodiment of the present application, the cross-domain transmission of a label enables traffic information to be transmitted from an application server and a core network to an access network, the encryption of application layer data can be guaranteed while it is ensured that the specific traffic can be identified by the access network. The cross-domain transmission of a label may include the operations below.

In operation 1, an application layer configures a third-party application software label for a data flow transmitted from a traffic server and sends the label to the core network.

In operation 2, the core network converts the data flow marked with the third-party application software label into a data flow corresponding to a special QoS parameter and executes a corresponding special routing policy and charging policy.

In operation 3, after receiving the data flow with the preceding label from the core network, the access network carries the data flow on a reserved resource for transmission.

FIG. 3 is a diagram illustrating label configuration according to an embodiment of the present application. Referring to FIG. 3, in an exemplary embodiment, the first network element may iterate and update a label. At the early operation stage of a traffic, the first network element acquires relatively little traffic information. Label configuration for the traffic is relatively rough. Therefore, no appropriate resource can be configured for the related traffic. As more and more information is acquired in the operation of the traffic, label configuration is increasingly accurate. Therefore, the label needs to be iterated and updated. For example, an access network, serving as the first network element, can only identify the traffic as the video traffic at the beginning of the traffic, mark the traffic as "video" and locate a low resource priority for the traffic. With more and more traffic data, the feature of high-speed transmission of a large amount of data in a short period of time appears. The access network updates the label of the traffic as "high-definition video" and allocates a medium resource priority for the traffic. When data of the traffic with a certain delay is discarded even if the data is transmitted correctly, according to the feature of an ultra-low delay of the extended reality (XR) traffic, a high resource priority is located when the access network updates the label of the traffic to "XR". With the continuous iteration of the label, the label describes a system feature more and more accurately. Therefore, the system becomes increasingly intelligent. Moreover, the intelligent system may make labeling increasingly accurate.

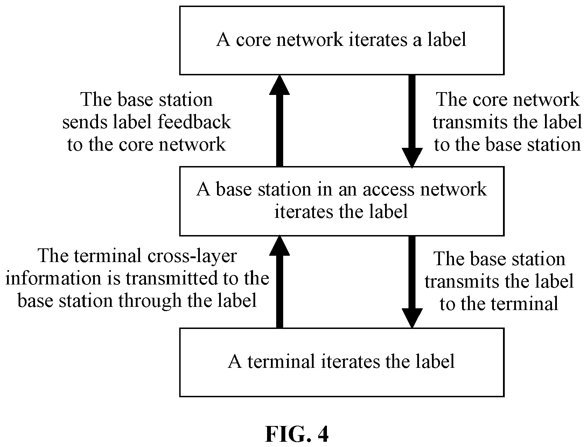

FIG. 4 is a diagram illustrating label iteration and updating according to an embodiment of the present application. Referring to FIG. 4, in a communication system, label iteration and updating may include label feedback and transmission. A terminal has an advantage in acquiring cross-layer information. The terminal generates label 1 by perceiving the cross-layer information and transmits label 1 to a base station. The base station iterates and updates label 1 transmitted from the terminal according to the perceived information to form new label 2 and establish a mapping relationship between label 1 and label 2. The base station feeds back label 1 and label 2 to a core network. The core network generates label 3 according to label 1, label 2 and the information perceived by the core network. In the opposite direction, the core network may transmit the generated label to the base station. The base station performs iteration and updating according to the label and then transmits the label to the terminal. The terminal performs label iteration according to the received label. The efficient and accurate interaction of cross-layer and cross-domain information is implemented through label transmission, mapping, as well as iteration and updating.

In an exemplary embodiment, the first network element may also manage the life cycle of the label. In a communication system, some states remain constant for a long time, and the life cycles of their labels are very long. Some states are time-sensitive, and the life cycles of their labels are shorter. For example, in gymnasium scenarios, large-scale gathering activities such as sports events or concerts are often held. During a large-scale gathering activity, live broadcast traffic surges, a special communication guarantee is required. When the system identifies that the region is under a gymnasium scenario, a communication node (for example, a base station, a core network, a user plane function (UPF), and mobile edge computing (MEC)) serving the region is marked with a "gymnasium scenario" label. The gymnasium scenario generally does not change. Therefore, the life cycle corresponding to this label may be several years or even decades. However, the communication node with the "gymnasium scenario" label needs to have resource reservation capability, load balancing capability, and/or local diversion capability. The communication node uses a "high traffic volume" label for interaction and executes resource reservation, load balancing, local diversion policies, and the like when large-scale activities are held in the gymnasium. The communication node uses a "normal traffic volume" label for interaction and executes common resource allocation and communication policies when no activity is held. The life cycle of the traffic state may be managed through the label. From the perspective of label splitting and grading, "gymnasium scenario" is regarded as a first-level label, and "high traffic volume" and "normal traffic volume" are regarded as second-level labels.

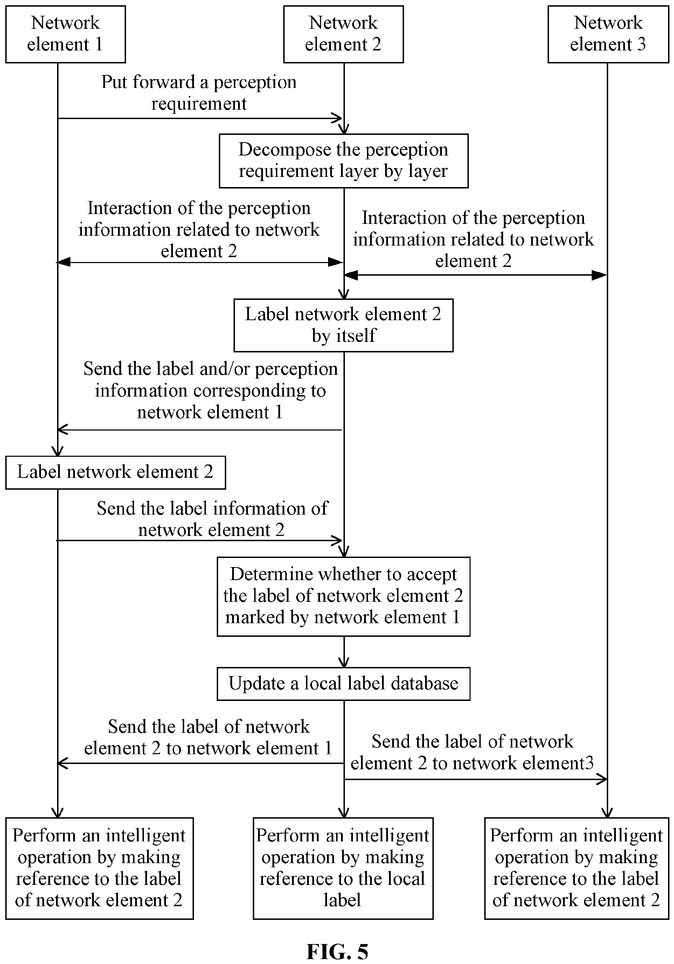

In an exemplary embodiment, FIG. 5 is an example diagram of an information processing method according to an embodiment of the present application. Referring to FIG. 5, the overall perception of interaction information may be implemented through a label in this embodiment of the present application. The information processing method may include the following operations.

In operation 1, network element 1 puts forward a perception requirement to network element 2.

In operation 2, network element 2 decomposes the perception requirement layer by layer and may need to acquire perception information from network element 3 in the process of decomposition.

In operation 3, network element 2 configures the label of network element 2 according to the cognition of itself after decomposing the perception information and interacting with another network element.

In operation 4, network element 2 sends the label of network element 2 and the perception information of network element 1 to network element 1.

In operation 5, network element 1 configures a label to network element 2 according to the received label and perception information from network element 2 and sends the label to network element 2.

In operation 6, network element 2 determines the label of network element 2 configured by network element 1, and when network element 2 approves the label configured by network element 1, network element 2 updates the label of network element 2 in a local label database.

In operation 7, network element 2 sends the updated label to other related subjects (for example, network element 1 and network element 3) to assist another network element in intelligent processing.

In operation 8, network element 2 performs intelligent processing such as configuration, orchestration, management, and initiation of a specific process according to the label in the label database. The label is obtained through analysis and reasoning and has a certain degree of intelligence. Moreover, the label contains rich semantics, which makes the expression of requirements and intentions clearer. Therefore, the label may be used for performing an intelligent operation.

In another exemplary embodiment, the first network element may use the label to perform instantiation. The label-based instantiation may implement an on-site customization function in a communication system. The label may be used to dynamically generate a group + traffic instance. For example, after the system operates on one slice for a period of time, it is found that the slice is difficult to support more system users. A batch of users needs to be migrated to another slice. Users of a unique traffic may be captured through a corresponding label. For example, XR users may be captured for separate deployment, while other traditional user traffic continues to use the original slice.

In another exemplary embodiment, the label may be used for an instantiation process of system energy saving. An idle mobile terminal (UE) is taken as an example, the UE needs to acquire system information of a cell during the moving process. In a dense cell scenario, multiple adjacent cells often have the same system information. The network faces the problem of a waste of resources due to repeated transmission of system information. The frequency of these cells transmitting system information can be reduced by using a label. A UE moving within the range of these cells only needs to detect the system information of any one cell among the cells.

In an exemplary embodiment, various types of labels may be used in information processing and may be stored in a structured and/or unstructured manner to form a label database. For example, the labels are graded according to importance. For example, the system first sends a first-level label in the form of broadcasting and then sends a second-level label directionally when a further request is received. The labels are divided into parent labels and child labels according to the attribute of inheritance. A child label may inherit an attribute feature of a parent label and can extend a new feature attribute. The labels are divided into phenomenon labels and inference labels according to the attribute of logic. The phenomenon labels, such as "call drop", "no signal", "lag", and "smoothness" reflect phenomena that can be directly observed. The inference labels are generally information acquired by processing and analyzing collected data and even through manners including machine learning, association, and tentative guess. The labels may be divided into normal labels and dynamic labels according to the attribute of time. Additionally, the labels may also include qualitative labels in literal form and quantitative labels in numerical form. The labels stored in the label database include, but are not limited to, parent labels, child labels, extension labels, information compression labels, segmentation labels, statically fixed labels, dynamically variable labels, qualitative labels, quantitative labels, grading labels, state labels, demand labels, time labels, scenario labels, traffic labels, performance labels, device labels, capability labels, configuration labels, security labels, model labels, operation and maintenance labels, computing power labels, and mobile labels. For example, graphics processing unit (GPU) and storage belong to the computing power labels; low delay and large bandwidth belong to the capability labels; and high-speed mobility belongs to the mobile labels. A certain association relationship may exist between labels. If no suitable label exists in the label types of the related art, a new type may be generated. The same subject may own multiple labels simultaneously. Label classification and the use of labels in all aspects of communication implement differentiated effects in functions, flows, traffic, and resources.

In an exemplary embodiment, the macroscopic feature information of a label may include, for example, the reason (WHY), what degree (WHAT), which user (WHO), which place (WHERE), what time (WHEN), and what way (HOW). A network element may aggregate trivial information to generate the label with a macroscopic feature. The label transmits information from the macroscopic level and demand level, which is not limited to the form of parameter transmission but also may be the form of natural language or recognized natural language translation. The label may also reflect network information, such as system performance, capability, and fault condition, and specific information, such as the device type information, manufacturer information, model information, position information and communication time information of a communication subject. For example, association analysis is performed on data flows with the same label, which may help with the analysis of the network state and the positioning of a network problem. For example, a hardware problem of a certain mobile phone may be determined through a user label.

In an exemplary embodiment, the label may be used for network orchestration control. In an initial stage of network deployment, functions, algorithms, and resources may be automatically orchestrated and cropped through a label for the system state and future network architecture. For example, a network may achieve the target of low delay and high reliability through a "low delay and high reliability" label by cutting off the retransmission function of a user plane and allocating a reserved resource. The use of a label avoids the cold booting process in the initial stage of the network, enabling the network to quickly perform reasonable resource allocation and select an appropriate function and algorithm.

The deep collaboration among a core network, a transmission network, and an access network can also be implemented through the label. For example, storage sharing in the same traffic field is implemented through a label. For example, a radio access network (RAN) and a core network (CN) share the same protocol stack and flow by using the same label.

Communication nodes and data flows of enterprises may also be distinguished by the label, which guarantees that the data flows only flow among nodes with the same enterprise label. Within an enterprise, a label enables the implementation of statistical data tracking and accurate resource allocation.

In another exemplary embodiment, a network element may use a label for cross-domain and cross-platform information interaction. For example, a label is used as a bridge for information translation among different networks including a computing power network, a communication network, the Internet, the Internet of Vehicles, and an enterprise network, breaking down information barriers. For example, the "high load" label of the computing power network refers to the high occupation of a central processing unit (CPU) and the high occupation of a memory, and the "high load" label of the radio access network refers to the shortage of spectrum resources. However, the same "high load" label contains the physical meaning of network congestion.

For different operators, different device manufacturers, different systems, and different fields, it may be difficult to understand each other due to different internal implementation mechanisms. When a label is used as a bridge for communication, the obstacle of information interaction is broken down. For example, in a hybrid network of different operators, such as the Internet of Vehicles, frequent interaction between multiple operating networks is required. Different networks may understand to-be-transferred information of each other through a label. Similarly, in a radio communication system, purchased devices may be from different manufacturers. The interconnection between different manufacturers also needs to be strengthened through a label.

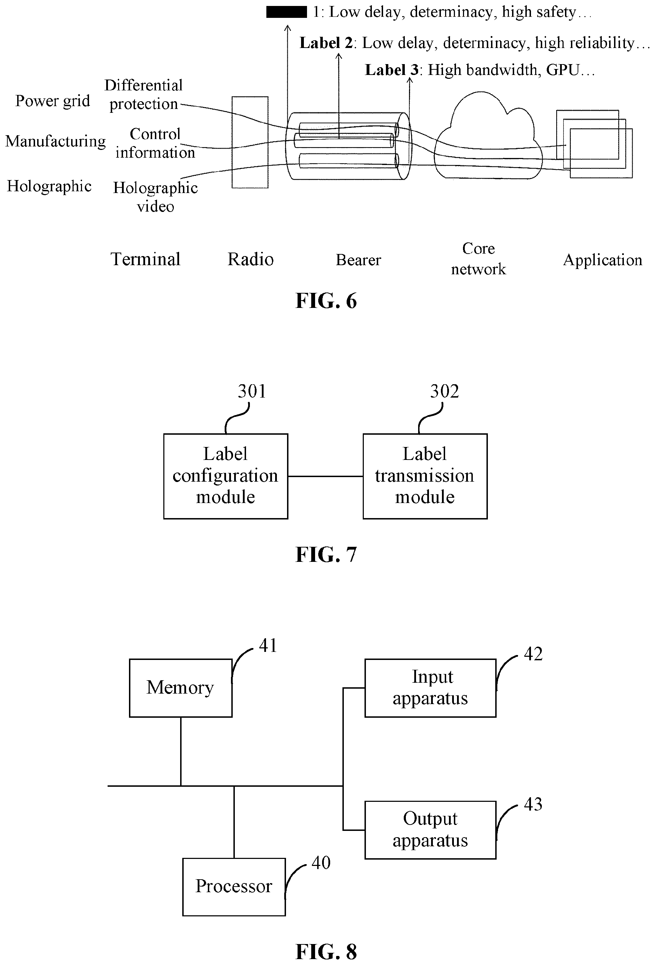

For example, FIG. 6 is a diagram illustrating cross-domain communication through a label. Regarding a power grid, manufacturing, and a holographic scenario, different labels are used for implementing traffic collaboration from a terminal, a radio access network, a bearer network, and a core network to an application.

In another exemplary embodiment, blockchain may implement an alliance based on labels. Blockchain has no center, and a blockchain alliance may be formed through a combination with labels. Every participant in an ecological chain may place a label on the blockchain for everyone to view and use. For example, a label is formed after identifying a certain traffic feature. Other participants use the label to identify the same traffic.

FIG. 7 is a structural diagram of an information processing apparatus according to an embodiment of the present application. The apparatus may perform the information processing method provided by any embodiment of the present application, and has functional modules and beneficial effects corresponding to the method performed. The apparatus may be implemented through software and/or hardware and is generally applied to a first network element. The apparatus includes a label configuration module 301 and a label transmission module 302.

The label configuration module 301 is configured to configure a label according to a physical meaning corresponding to acquired attribute feature information, where the label is configured for communication with a second network element.

The label transmission module 302 is configured to send the label to the second network element.

In this embodiment of the present application, the label configuration module determines the physical meaning according to the acquired attribute feature information, and the label transmission module generates the label according to the physical meaning and sends the label to the second network element, improving the accuracy of cognition between network elements, improving the accuracy of communication parameter setting, and enhancing the communication efficiency of a radio communication system.

Further, on the basis of the preceding embodiments of the present application, the label configuration module includes at least one of the following processing: label mapping, label aggregation, label splitting, configuring a label for a data flow, configuring a label for control plane signaling, configuring a label for a flow, configuring a label for a policy, configuring a label for an algorithm, configuring a label for a process, configuring a label for an orchestration mode, configuring a label for an instance, or configuring a label for a parameter.

Further, on the basis of the preceding embodiments of the present application, the label in the apparatus includes at least one of the following: a label of the first network element, a label of the second network element, or a label of the third network element.

Further, on the basis of the preceding embodiments of the present application, the label mapping includes that the first network element establishes a correspondence relationship between an acquired new label and an old label already existing in the first network element, where the relationship includes one of the following: a one-to-one relationship, a one-to-many relationship, or a many-to-many relationship.

Further, on the basis of the preceding embodiments of the present application, the label aggregation includes that the first network element aggregates acquired labels to generate a label with a macroscopic feature.

Further, on the basis of the preceding embodiments of the present application, the label splitting includes that the first network element splits an acquired label into different levels to generate multi-level labels.

Further, on the basis of the preceding embodiments of the present application, a target of configuring the label for the data flow includes one of the following: controlling transmission and processing of the data flow according to the label, controlling quality of service (QoS) guarantee of the data flow according to the label, or carrying the label in a data bearer for transmission.

Further, on the basis of the preceding embodiments of the present application, a target of configuring the label for the control plane signaling includes one of the following: performing signaling management according to the label, or carrying the label in a signaling bearer of a control plane for transmission.

Further, on the basis of the preceding embodiments of the present application, a method of the first network element acquiring the label in the apparatus includes at least one of the following.

The first network element generates the label according to a physical meaning corresponding to internally-perceived attribute feature information.

The first network element generates the label according to a physical meaning corresponding to attribute feature information from another network element.

The first network element takes a label from another network element as the label.

The first network element generates the label according to a physical meaning corresponding to internally-perceived attribute feature information and attribute feature information from another network element.

The first network element subscribes to the second network element for receiving a label published by the second network element.

The first network element acquires the label according to measurement of the second network element.

The first network element sends an information request to the second network element and receives a message response to acquire the label.

Further, on the basis of the preceding embodiments of the present application, the apparatus also performs at least one of the operations below.

The first network element sends the label to the second network element.

The first network element sends the label to the second network element so that the second network element forwards the label to a third network element.

The first network element publishes the label to a network element already subscribing to a label notification service.

The first network element sends label feedback to the second network element after the first network element receives a label of the second network element.

The first network element receives feedback from the second network element on the first network element sending the label.

The first network element carries the label in a data subheader for sending.

The first network element carries the label in control signaling for sending.

Further, on the basis of the preceding embodiments of the present application, the apparatus also performs at least one of the operations below.

At least one set of rules is selected according to the label, and the at least one set of rules is executed according to the at least one set of rules.

At least one set of policies is selected according to the label, and the at least one set of policies is executed according to the at least one set of policies.

At least one set of network orchestration modes is selected according to the label, and network orchestration is performed according to the at least one set of network orchestration modes.

At least one instantiation process is selected according to the label, and instantiation is performed according to the at least one instantiation process.

At least one flow is selected according to the label, and the at least one flow is executed according to the at least one flow.

At least one set of parameters is selected according to the label, and parameter configuration is performed according to the at least one set of parameters.

An intelligent operation is performed according to the label.

Further, on the basis of the preceding embodiments of the present application, the apparatus further includes a label storage module configured to store the acquired label. The label storage module is configured to perform at least one of the following.

The label is taken as a newly-added label for storage.

A stored old label is replaced with the label.

The acquired new label is stored, and an old label mutually exclusive to the acquired new label is deleted.

The acquired new label and an old label are split and recombined to form multi-level labels, and the multi-level labels are stored.

A mapping relationship between the acquired new label and an old label is established, and the mapping relationship of labels is stored.

The acquired new label and an old label are aggregated to form an aggregation label, and the aggregation label is stored.

Further, on the basis of the preceding embodiments of the present application, the stored label is deleted when one of the following conditions is satisfied: A survival timer of the label times out, or an extinction condition of the label is triggered.

Further, on the basis of the preceding embodiments of the present application, the type of the label includes one of the following: a parent label, a child label, an extension label, an information compression label, a segmentation label, a statically fixed label, a dynamically variable label, a qualitative label, a quantitative label, a grading label, a state label, a demand label, a time label, a scenario label, a traffic label, a performance label, a device label, a configuration label, a security label, a model label, or an operation and maintenance label.

Further, on the basis of the preceding embodiments of the present application, the attribute feature information corresponding to the label includes at least one of the following: communication resource information, computing power resource information, node intention information, node semantic information, node target information, node demand information, system performance information, system capability information, system fault information, device type information, device manufacturer information, device model information, node position information, node time information, or node policy execution information.

Further, on the basis of the preceding embodiments of the present application, the apparatus is further configured to perform a method of acquiring the internally-perceived attribute feature information. The method includes at least one of the following operations: Self-stored information is extracted on demand, or information reporting and summarization are performed through specific internal signaling.

Further, on the basis of the preceding embodiments of the present application, the attribute feature information in the apparatus includes at least one of the following: a performance parameter, a configuration parameter, a traffic feature parameter, a statistical parameter, a signaling parameter, or a label from another network element.

Further, on the basis of the preceding embodiments of the present application, a network element in the apparatus includes one of the following: a domain, a subject, a node, an entity, a protocol layer, an access network, a core network, a transmission network, a radio access network, a wired access network, a base station, a terminal, a communication network element, or a network function.

FIG. 8 is a structural diagram of an electronic device according to an embodiment of the present application. The electronic device includes a processor 40, a memory 41, an input apparatus 42, and an output apparatus 43. One or more processors 40 may be included in the electronic device. One processor 40 is shown as an example in FIG. 8. The processor 40, the memory 41, the input apparatus 42, and the output apparatus 43 in the electronic device may be connected via a bus or in other manners. The connection via a bus is shown as an example in FIG. 8.

As a computer-readable storage medium, the memory 41 may be configured to store software programs, computer-executable programs and modules, for example, modules (the label configuration module 301 and the label transmission module 302) corresponding to the information processing apparatus in the embodiment of the present application. The processor 40 executes software programs, instructions, and modules stored in the memory 41 to perform function applications and data processing of the electronic device, that is, to perform the preceding information processing method.

The memory 41 may mainly include a program storage region and a data storage region. The program storage region may store an operating system and an application program required by at least one function. The data storage region may store data created based on the use of the electronic device. Additionally, the memory 41 may include a high-speed random-access memory and may also include a nonvolatile memory, such as at least one magnetic disk memory, a flash memory or another nonvolatile solid-state memory. In some examples, the memory 71 may further include a memory remotely disposed with respect to the processor 40. These remote memories may be connected to the electronic device via a network. Examples of the preceding network include, but are not limited to, the Internet, an intranet, a local area network, a mobile communication network and a combination thereof.

The input apparatus 42 may be configured to receive inputted digital or character information and generate key signal input related to user settings and function control of the electronic device. The output apparatus 73 may include a display device such as a display screen.

Embodiments of the present application further provide a storage medium including computer-executable instructions. When executed by a computer processor, the computer-executable instructions are used to cause the computer processor to perform an information processing method. The method includes the following:
A first network element configures a label according to a physical meaning corresponding to acquired attribute feature information, where the label is configured for communicating with a second network element; and the first network element sends the label to the second network element.

From the preceding description of embodiments, it is apparent to those skilled in the art that the present application may be implemented by use of software and necessary general-purpose hardware or may be implemented by hardware. Based on this understanding, the technical solutions of the present application substantially, or the part contributing to the related art, may be embodied in the form of a software product. The computer software product may be stored in a computer-readable storage medium such as a floppy disk, a read-only memory (ROM), a random-access memory (RAM), a flash memory, a hard disk, or an optical disk of a computer and includes several instructions for causing a computer device (which may be a personal computer, a server, or a network device) to perform the method in the embodiments of the present application.

It is to be noted that units and modules that are included in the embodiment of the apparatus are merely divided according to functional logic, and the division is not limited to this as long as the corresponding functions can be performed. Additionally, the specific names of function units are merely intended for distinguishing between each other and are not to limit the scope of the present application. The computer-readable storage medium may be a non-transient computer-readable storage medium.

It is to be understood by those having ordinary skill in the art that some or all steps of the preceding method and function modules/units in the preceding system or device may be implemented as software, firmware, hardware and suitable combinations thereof.

In the hardware implementation, the division of the preceding function modules/units may not correspond to the division of physical components. For example, one physical component may have multiple functions, or one function or step may be performed jointly by several physical components. Some or all physical components may be implemented as software executed by a processor such as a central processing unit, a digital signal processor, or a microprocessor, may be implemented as hardware, or may be implemented as integrated circuits such as application-specific integrated circuits. Such software may be distributed on computer-readable media. The computer-readable media may include computer storage media (or non-transitory media) and communication media (or transitory media). As known to those of ordinary skill in the art, the term "the computer storage media" includes volatile and non-volatile as well as removable and non-removable media implemented in any method or technology for storing information (such as computer-readable instructions, data structures, program modules, or other data). The computer storage media include, but are not limited to, a random-access memory (RAM), a read-only memory (ROM), an electrically erasable programmable read-only memory (EEPROM), a flash memory or other memory technologies, a compact disc read-only memory (CD-ROM), a digital versatile disc (DVD) or other optical disc storages, a magnetic cassette, a magnetic tape, a magnetic disk or other magnetic storage devices, or any other medium that can be used for storing desired information and can be accessed by a computer. Moreover, as known to those of ordinary skill in the art, the communication media generally include computer-readable instructions, data structures, program modules, or other data in carriers or in modulated data signals transported in other transport mechanisms and may include any information delivery medium.

In embodiments of the present application, a label is used to improve the cognition accuracy between network elements, improve the accuracy of communication parameter selection, improve the efficiency of data transmission, and reduce the overhead of information communication.

## Claims

1. An information processing method, comprising:
configuring, by a first network element, a label according to a physical meaning corresponding to acquired attribute feature information, wherein the label is configured for communication with a second network element; and
sending, by the first network element, the label to the second network element.

2. The method according to claim 1, wherein configuring, by the first network element, the label comprises at least one of the following processing: label mapping, label aggregation, label splitting, configuring the label for a data flow, configuring the label for control plane signaling, configuring the label for a flow, configuring the label for a policy, configuring the label for an algorithm, configuring the label for a process, configuring the label for an orchestration mode, configuring the label for an instance, or configuring the label for a parameter.

3. The method according to claim 1, wherein the label comprises at least one of: a label of the first network element, a label of the second network element, or a label of a third network element.

4. The method according to claim 2, wherein the label mapping comprises: establishing, by the first network element, a correspondence relationship between an acquired new label and an old label already existing in the first network element,
wherein the relationship comprises one of: a one-to-one relationship, a one-to-many relationship, or a many-to-many relationship.

5. The method according to claim 2, wherein the label aggregation comprises: aggregating, by the first network element, acquired labels to generate a label with a macroscopic feature.

6. The method according to claim 2, wherein the label splitting comprises: splitting, by the first network element, an acquired label into different levels to generate multi-level labels.

7. The method according to claim 2, wherein a target of configuring the label for the data flow comprises one of the following:
controlling transmission and processing of the data flow according to the label;
controlling quality of service, QoS, guarantee of the data flow according to the label; or
carrying the label in a data bearer for transmission.

8. The method according to claim 2, wherein a target of configuring the label for the control plane signaling comprises one of the following:
performing signaling management according to the label; or
carrying the label in a signaling bearer of a control plane for transmission.

9. The method according to claim 1, wherein a method of the first network element configuring the label comprises at least one of the following:
generating, by the first network element, the label according to a physical meaning corresponding to internally-perceived attribute feature information;
generating, by the first network element, the label according to a physical meaning corresponding to attribute feature information from a network element other than the first network element;
using, by the first network element, a label from a network element other than the first network element as the label;
generating, by the first network element, the label according to a physical meaning corresponding to internally-perceived attribute feature information and attribute feature information from a network element other than the first network element;
subscribing, by the first network element, to the second network element for receiving a label published by the second network element;
acquiring, by the first network element, the label according to measurement of the second network element; or
sending, by the first network element, an information request to the second network element and receiving a message response to acquire the label;

10. The method according to claim 9, wherein after configuring, by the first network element, the label according to the physical meaning corresponding to the acquired attribute feature information, the method further comprises performing at least one of the following operations:
sending, by the first network element, the label to a third network element through the second network element;
publishing, by the first network element, the label to a network element already subscribing to a label notification service;
sending, by the first network element, label feedback to the second network element after the first network element receives a label of the second network element;
receiving, by the first network element, feedback from the second network element on the first network element sending the label;
carrying, by the first network element, the label in a data subheader for sending; or
carrying, by the first network element, the label in control signaling for sending.

11. The method according to claim 1 or 2, wherein after configuring, by the first network element, the label according to the physical meaning corresponding to the acquired attribute feature information, the method further comprises performing at least one of the following operations:
selecting at least one set of rules according to the label, and executing the at least one set of rules;
selecting at least one set of policies according to the label, and executing the at least one set of policies;
selecting at least one set of network orchestration modes according to the label, and performing network orchestration according to the at least one set of network orchestration modes;
selecting at least one instantiation process according to the label, and performing instantiation according to the at least one instantiation process;
selecting at least one flow according to the label, and executing the at least one flow;
selecting at least one set of parameters according to the label, and performing parameter configuration according to the at least one set of parameters; or
performing an intelligent operation according to the label.

12. The method according to claim 1, further comprising storing, by the first network element, the label, wherein storing, by the first network element, the label comprises one of the following:
taking the label as a newly-added label for storage;
replacing a stored old label with the label;
storing the label, and deleting an old label mutually exclusive to the label;
splitting and recombining the label and an old label to form multi-level labels, and storing the multi-level labels;
establishing a mapping relationship between the label and an old label, and storing the mapping relationship of labels; or
aggregating the label and an old label to form an aggregation label, and storing the aggregation label.

13. The method according to claim 12, wherein deleting a stored label when one of the following conditions is satisfied:
a survival timer of the label times out; or
an extinction condition of the label is triggered.

14. The method according to claim 12, wherein a type of the label comprises one of the following: a parent label, a child label, an extension label, an information compression label, a segmentation label, a statically fixed label, a dynamically variable label, a qualitative label, a quantitative label, a grading label, a state label, a demand label, a time label, a scenario label, a traffic label, a performance label, a device label, a configuration label, a security label, a model label, or an operation and maintenance label.

15. The method according to claim 1, wherein the attribute feature information corresponding to the label comprises at least one of the following: communication resource information, computing power resource information, node intention information, node semantic information, node target information, node demand information, system performance information, system capability information, system fault information, device type information, device manufacturer information, device model information, node position information, node time information, or node policy execution information.

16. The method according to claim 9, wherein the method of the first network element configuring the label comprises generating, by the first network element, the label according to the physical meaning corresponding to the internally-perceived attribute feature information and the attribute feature information from the network element other than the first network element, wherein an acquisition method of the internally-perceived attribute feature information comprises at least one of the following:
extracting self-stored information on demand; or
performing information reporting and summarization through specific internal signaling.

17. The method according to claim 1, wherein the attribute feature information comprises at least one of the following: a performance parameter, a configuration parameter, a traffic feature parameter, a statistical parameter, a signaling parameter, or a label from a network element other than the first network element.

18. The method according to claim 3, wherein a network element comprises one of the following: a domain, a subject, a node, an entity, a protocol layer, an access network, a core network, a transmission network, a radio access network, a wired access network, a base station, a terminal, a communication network element, or a network function.

19. An electronic device, comprising:
at least one processor; and
a memory, configured to store at least one program,
wherein when the at least one program is executed by the at least one processor, the at least one processor is caused to perform the information processing method according to any one of claims 1 to 18.

20. A computer-readable storage medium for storing at least one program, wherein when the at least one program is executed by at least one processor, the information processing method according to any one of claims 1 to 18 is performed.
